# EUROPÄISCHE PATENTANMELDUNG

(11) **EP 4 224 314 A1**
(43) Veröffentlichungstag der Anmeldung: **09.08.2023**
(21) Anmeldenummer: 22155428.0
(22) Anmeldetag: 07.02.2022
(51) Int. Cl.: G06F 8/656, G06F 11/36

(54) **SICHERES UPGRADE VON AUTOMATISIERUNGSFUNKTIONEN MIT KUBERNETES**

(71) Anmelder: Siemens Aktiengesellschaft, 80333 München (DE)
(72) Erfinder: Bartholdt, Jörg, 81737 München (DE); Höfig, Kai, 83101 Rohrdorf (DE); Mittermeier, Ludwig Andreas, 81541 München (DE); Stückjürgen, Christoph, 80807 München (DE)
(74) Vertreter: Siemens Patent Attorneys

(57) **Zusammenfassung**

Die Erfindung gibt ein automatisiertes Verfahren zum unterbrechungsfreien Upgrade einer Automatisierungsfunktion (AF1, AF2) an, die ausgebildet ist, Aktuatoren zu steuern und Daten von Sensoren zu empfangen, aufweisend die Schritte:
- Bereitstellung (Schritt S3) einer Customer-Resource-Definition an Kubernetes (COP), welche Informationen über die Automatisierungsfunktion enthält,
- Erstellung (Schritt S4) von zwei leeren Resourcen-Sets (R1, R2) durch Kubernetes (COP) für eine erste Automatisierungsfunktion (AF1) und eine zweite Automatisierungsfunktion (AF2), wobei die erste Automatisierungsfunktion (AF1) und die zweite Automatisierungsfunktion (AF2) zwei verschiedene Versionen der Automatisierungsfunktion sind,
- Befüllung (Schritt S5) des erste Resourcen Sets (R1) mit der ersten Automatisierungsfunktion (AF1) durch Kubernetes (COP),
- Starten der erste Automatisierungsfunktion (AF1) durch Kubernetes (COP), wobei die erste Automatisierungsfunktion (AF1) die Aktuatoren steuert und von den Sensoren Daten empfängt,
- Befüllung (Schritt S8) des zweiten Resourcen Sets (R2) mit der zweiten Automatisierungsfunktion (AF2) durch Kubernetes (COP),
- Starten der zweiten Automatisierungsfunktion (AF2) durch Kubernetes (COP), wobei die zweite Automatisierungsfunktion (AF2) Daten von den Sensoren empfängt aber mit den Aktuatoren nicht verbunden ist,
- automatisierter Test (Schritt S9) der zweiten Automatisierungsfunktion (AF2), wobei die Sensoren verbunden sind, aber die Ausgaben der zweiten Automatisierungsfunktion (AF2) nicht an die Aktuatoren weitergegeben werden.
- nach dem erfolgreichen Test, Einleiten und Koordination (Schritt S10) des Übergangs von der ersten Automatisierungsfunktion (AF1) auf die zweite Automatisierungsfunktion (AF2), und
- Übergabe der Steuerung der Aktuatoren von der ersten Automatisierungsfunktion (AF1) an die zweite Automatisierungsfunktion (AF2).

Ein zugehöriges System sowie ein Computerprogrammprodukt und ein computerlesbares Medium werden ebenfalls angegeben.

## Beschreibung

### GEBIET DER ERFINDUNG

Die Erfindung betrifft ein automatisiertes Verfahren, insbesondere ein computerimplementiertes Verfahren, und ein System, zum unterbrechungsfreien Upgrade einer Automatisierungsfunktion, die ausgebildet ist, Aktuatoren zu steuern und Daten von Sensoren zu empfangen. Die Erfindung betrifft auch ein zugehöriges Computerprogrammprodukt und ein computerlesbares Medium.

### HINTERGRUND DER ERFINDUNG

Im Fokus der Offenbarung stehen industrielle Anwendungen, insbesondere Automatisierungsfunktionen. Diese werden zunehmend als Container verpackt und von einer Container-Orchestrierungsplattform wie Kubernetes verwaltet. Jedoch ist das Zusammenspiel zwischen Kubernetes und Tools der Automatisierungswelt problematisch im Hinblick auf das Monitoring und die Kontrolle von sicheren Upgrades von Automatisierungsfunktionen.

Kubernetes ist ein Open-Source-System zur Automatisierung der Bereitstellung, Skalierung und Verwaltung von Container-Anwendungen Es zielt darauf ab, eine Plattform für das automatisierte Bereitstellen, Skalieren und Warten von Anwendungscontainern auf verteilten Hosts zu liefern. Es unterstützt eine Vielzahl von Container-Tools. Die Orchestrierung mittels Kubernetes wird von vielen Cloud-Plattformen, wie zum Beispiel Microsofts Azure oder Googles Kubernetes Engine, unterstützt.

Bei einem, wie oben beschriebenen, Vorgang ist der physikalische Kontext zu berücksichtigen, was derzeit z.B. mit Kubernetes nicht möglich ist, wie zum Beispiel die Steuerung eines Roboterarms hat in Version 1 ein anderes Bewegungs-Profil als in Version 2. Anders als in der IT-Welt ist es in der Automatisierungswelt nicht möglich, eine Rolling Update Strategie anzuwenden, also eine neue Version parallel zu einer alten Version hochzufahren und die alte Version abzuschalten, sobald die neue erfolgreich gestartet ist. Der Grund dafür ist, dass hinter der Steuerung ein einzelner physikalischer Roboter steht, der zu jedem Zeitpunkt korrekt funktionieren muss und insbesondere das Umschalten von einer Version der Steuerung zu einer anderen zu einem geeigneten Zeitpunkt auf koordinierte Art und Weise erfolgen muss.

Automatisierungsfunktionen (AF) werden bislang vorwiegend auf Speicherprogrammierbaren Steuerungen (Kurz: SPS) ausgeführt. Die Verwaltung der AFs, beispielsweise das Starten, Stoppen oder Einspielen neuer Versionen erfolgt über Werkzeuge, die proprietär für das jeweilige SPS-System sind, beispielsweise das TIA-Portal für Systeme von Siemens. Diese Werkzeuge berücksichtigen die besonderen Anforderungen von AFs, z. B.:
- Monitoring und Manipulation von Prozessvariablen, oder
- Updates von AFs im laufenden Betrieb, während ein physikalisches System von der AF gesteuert wird.

Heutzutage werden AFs zunehmend auch auf IT-Systemen zur Ausführung gebracht. In IT-Systemen sind diverse Standard-Werkzeuge zum Verwalten von Programmen verfügbar. Werden nun AFs auf IT-Systemen ausgeführt, so werden zum Verwalten der AFs einerseits die aus der SPS-Welt bekannten proprietären Werkzeuge verwendet, andererseits die Standard-Werkzeuge aus der IT-Welt.

In der IT-Welt werden Mechanismen zum nahtlosen Update eingesetzt, die im industriellen Umfeld nicht funktionieren, z.B. Rolling Update: dazu wird ein Service horizontal skaliert, d.h. mehrere Instanzen davon laufen parallel und werden über einen Loadbalancer angesteuert. Zum Upgrade wird zunächst einer davon aus der Gruppe gelöst (die n-1 anderen übernehmen die Last), das Upgrade durchgeführt und wieder der Loadbalancing-Gruppe hinzugefügt. Alternativ kann ein Rolling Update auch so konfiguriert werden, dass für das Upgrade weitere Service-Instanzen hinzugefügt werden und so immer n Instanzen die Last tragen. Auf diese Weise können alle einzelnen Instanzen nacheinander auf die neue Version gebracht werden.

Bei einer industriellen Steuerung steht aber ein physikalisches Gerät (z.B. Roboter) dahinter. Dieses würde für den Moment des Upgrades ausfallen. Für ein Upgrade von AFs in einer IT-Umgebung wird daher das System gestoppt und die alte Version durch die neue ersetzt und erneut gestartet.

### ZUSAMMENFASSUNG DER ERFINDUNG

Es ist Aufgabe der Erfindung, eine Lösung anzugeben, wie bei Automatisierungsfunktionen in einer Kubernetes Umgebung ein unterbrechungsfreies Upgrade erfolgen kann.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

In einem Aspekt der Erfindung werden die Konzepte der Offenbarung der Patentanmeldung EP 3502875 A1 mit der Container Orchestrierungsplattform Kubernetes verbunden. Die Patentanmeldung EP 3502875 A1 offenbart ein sicheres und nahtloses Upgrade einer Softwarefunktion, die einen physikalischen Aktuator steuert. Dies wird durch die folgenden Konzepte ermöglicht:
- Testprobe: Ermöglicht lesenden und schreibenden Zugriff auf Sensordaten, Aktuatordaten sowie interne Variablen der AF. Ermöglicht die Ausführung von Testprogrammen, welche auf diesen Daten basieren.
- Authority Determination: Berechnet einen Performance-Level einer AF, basierend auf den Ergebnissen der Test Programmen.
- Primary Activation: Koordiniert den nahtlosen Übergang von einer alten Version einer AF zu einer neuen.
- Actuator Proxy: Stellt sicher, dass beim parallelen Deployment von alter und neuer Version einer AF immer nur jeweils eine Version Zugriff auf die Aktuatorik hat.
- Authority Determination, Primary Activation und Actuator Proxy bilden zusammen eine sogenannte Upgrade Unit.

Die technische Lösung wendet diese Konzepte in der Container Orchestrierungsplattform Kubernetes an und macht einen Upgrade-Vorgang somit mit den Tools von Kubernetes steuerbar. In Kubernetes können die Konzepte über sog. Custom Resource Sets realisiert werden.

Die Erfindung bietet den Vorteil, dass die IT-Welt und die OT-Welt weiter verschmelzen und einen komfortablen Umgang (flexible Deployments mit Containertechnologie) in einer "constrained" Umgebung wie der industriellen OT-Welt (unterbrechungsfreies Upgrade) möglich macht. Der wesentliche Unterschied zum Stand der Technik besteht darin, dass ein sicherer und unterbrechungsfreier Upgrade-Vorgang einer Automatisierungsfunktion mittels der Interaktion mit einer Erweiterungsschnittstelle einer in der IT-Welt gängigen Container-Orchestrierungsplattform geschieht

Die Erfindung beansprucht ein automatisiertes Verfahren zum unterbrechungsfreien Upgrade einer Automatisierungsfunktion, die ausgebildet ist, Aktuatoren zu steuern und Daten von Sensoren zu empfangen, gekennzeichnet durch:
- Bereitstellung einer Customer-Resource-Definition an Kubernetes, welche Informationen über die Automatisierungsfunktion AF enthält,
- Erstellung von zwei leeren Resourcen-Sets durch Kubernetes für eine erste Automatisierungsfunktion und eine zweite Automatisierungsfunktion, wobei die erste Automatisierungsfunktion und die zweite Automatisierungsfunktion zwei verschiedene Versionen der Automatisierungsfunktion sind,
- Befüllung des erste Resourcen Sets mit der ersten Automatisierungsfunktion durch Kubernetes,
- Starten der erste Automatisierungsfunktion durch Kubernetes, wobei die erste Automatisierungsfunktion die Aktuatoren steuert und von den Sensoren Daten empfängt.

Das erste Resourcen Set R1 enthält somit die erste Automatisierungsfunktion AF1. Das zweite Resourcen Set R2 ist leer und steht bereit (Schritt S5) für eine weitere Version der Automatisierungsfunktion.
- Befüllung des zweiten Resourcen Sets mit der zweiten Automatisierungsfunktion durch Kubernetes,
- Starten der zweiten Automatisierungsfunktion durch Kubernetes, wobei die zweite Automatisierungsfunktion Daten von den Sensoren empfängt aber mit den Aktuatoren nicht verbunden ist,
- automatisierter Test (Schritt S9) der zweiten Automatisierungsfunktion, wobei die Sensoren verbunden sind, aber die Ausgaben der zweiten Automatisierungsfunktion nicht an die Aktuatoren weitergegeben werden.

D.h. die Ausgabe verbleibt zunächst bei der ersten Automatisierungsfunktion.
- Nach dem erfolgreichen Test, Einleiten und Koordination (des Übergangs von der ersten Automatisierungsfunktion auf die zweite Automatisierungsfunktion, und
- Übergabe der Steuerung der Aktuatoren von der ersten Automatisierungsfunktion an die zweite Automatisierungsfunktion.

D.h. die zweite Automatisierungsfunktion AF2 übernimmt die ausführende Funktionalität.

Des Verfahrens ist derart weitergebildet, dass vor der Bereitstellung der Customer-Resource-Definition die Automatisierungsfunktion, die in einer industriellen Umgebung eingesetzt einsetzbar ist, und die Container Orchestrierung Plattform Kubernetes bereitgestellt wird.

Das Verfahren ist derart weitergebildet, dass der Kubernetes Cluster von Kubernetes um eine Custom Resource Definition ergänzt wird (wobei die Custom Resource Definition eine Schema-Beschreibung enthält, in der angegeben ist, welche Informationen über die Automatisierungsfunktion beim Anlegen einer Custom Resource für die Automatisierungsfunktion AF angegeben werden müssen.

Das Verfahren ist derart weitergebildet, dass der Kubernetes Cluster um einen Custom Resource Controller ergänzt wird, der SW Programm-Schritte enthält, die beim unterbrechungsfreien Upgrade der Automatisierungsfunktion ausgeführt werden.

Das Verfahren ist derart weitergebildet, dass die SW Programm-Schritte aufweisen:
- eine Installation der ersten und zweiten Automatisierungsfunktion in dem Resourcen-Set,
- ein Auslösen eines Test-Programms auf einer Testprobe der zweiten Automatisierungsfunktion, bevor sie Zugriff auf die Aktuatoren erhält (Preactivation Test),
- ein Auslösen des Umschaltvorgangs von der ersten (alten) auf die zweite (neue) Automatisierungsfunktion, welcher von Primary Activation koordiniert wird, und
- ein Auslösen eines Test-Programms auf der Testprobe der zweiten Automatisierungsfunktion, welches die zweite Automatisierungsfunktion überwacht, nachdem sie Zugriff auf die Aktuatoren erhalten hat.

Die Erfindung beansprucht auch ein System zum unterbrechungsfreien Upgrade einer Automatisierungsfunktion, die ausgebildet ist, Aktuatoren zu steuern und Daten von Sensoren zu empfangen, wobei das System mindestens einem Prozessor und mindestens einem Speicher einschließlich Programmcode aufweist, der, wenn er vom Prozessor ausgeführt wird, Operationen bereitstellt, die Folgendes aufweisen:
- Bereitstellung einer Customer-Resource-Definition an Kubernetes, welche Informationen über die Automatisierungsfunktion AF enthält,
- Erstellung von zwei leeren Resourcen-Sets durch Kubernetes für eine erste Automatisierungsfunktion und eine zweite Automatisierungsfunktion, wobei die erste Automatisierungsfunktion und die zweite Automatisierungsfunktion zwei verschiedene Versionen der Automatisierungsfunktion sind,
- Befüllung des erste Resourcen Sets mit der ersten Automatisierungsfunktion durch Kubernetes,
- Starten der erste Automatisierungsfunktion durch Kubernetes, wobei die erste Automatisierungsfunktion die Aktuatoren steuert und von den Sensoren Daten empfängt,
- Befüllung des zweiten Resourcen Sets mit der zweiten Automatisierungsfunktion durch Kubernetes,
- Starten der zweiten Automatisierungsfunktion durch Kubernetes, wobei die zweite Automatisierungsfunktion Daten von den Sensoren empfängt aber mit den Aktuatoren nicht verbunden ist,
- automatisierter Test der zweiten Automatisierungsfunktion, wobei die Sensoren verbunden sind, aber die Ausgaben der zweiten Automatisierungsfunktion nicht an die Aktuatoren weitergegeben werden,
- nach dem erfolgreichen Test, Einleiten und Koordination des Übergangs von der ersten Automatisierungsfunktion auf die zweite Automatisierungsfunktion, und
- Übergabe der Steuerung der Aktuatoren von der ersten Automatisierungsfunktion an die zweite Automatisierungsfunktion.

Das System ist des Weiteren derart ausgebildet, dass vor der Bereitstellung der Customer-Resource-Definition die Automatisierungsfunktion, die in einer industriellen Umgebung eingesetzt einsetzbar ist, und die Container Orchestrierung Plattform Kubernetes bereitgestellt ist.

Das System ist derart weitergebildet, dass der Kubernetes Cluster von Kubernetes um eine Custom Resource Definition ergänzt ist, wobei die Custom Resource Definition eine Schema-Beschreibung enthält, in der angegeben ist, welche Informationen über die Automatisierungsfunktion beim Anlegen einer Custom Resource für die Automatisierungsfunktion AF angegeben werden müssen.

Das System ist derart weitergebildet, dass der Kubernetes Cluster um einen Custom Resource Controller ergänzt ist, der SW Programm Operationen enthält, die beim unterbrechungsfreien Upgrade der Automatisierungsfunktion ausgeführt werden.

Das System ist derart weitergebildet, dass die SW Programm Operationen aufweisen:
- eine Installation der ersten und zweiten Automatisierungsfunktion in dem Resourcen-Set,
- ein Auslösen eines Test-Programms auf einer Testprobe der zweiten Automatisierungsfunktion, bevor sie Zugriff auf die Aktuatoren erhält (Preactivation Test),
- ein Auslösen des Umschaltvorgangs von der ersten (alten) auf die zweite (neue) Automatisierungsfunktion, welcher von Primary Activation koordiniert wird, und
- ein Auslösen eines Test-Programms auf der Testprobe der zweiten Automatisierungsfunktion, welches die zweite Automatisierungsfunktion überwacht, nachdem sie Zugriff auf die Aktuatoren erhalten hat.

Die Erfindung beansprucht auch ein Computerprogrammprodukt, umfassend ein Computerprogramm, wobei das Computerprogramm in eine Speichereinrichtung einer Einrichtung ladbar ist, wobei mit dem Computerprogramm die Schritte des erfindungsgemäßen Verfahrens ausgeführt werden, wenn das Computerprogramm auf der Einrichtung ausgeführt wird.

Schließlich beansprucht die Erfindung ein computerlesbares Medium, auf welchem ein Computerprogramm gespeichert ist, wobei das Computerprogramm in eine Speichereinrichtung einer Einrichtung ladbar ist, wobei mit dem Computerprogramm die Schritte des erfindungsgemäßen Verfahrens ausgeführt werden, wenn das Computerprogramm auf der Einrichtung ausgeführt wird.

Weitere Besonderheiten und Vorteile der Erfindung werden aus den nachfolgenden Erläuterungen eines Ausführungsbeispiels anhand einer schematischen Zeichnung ersichtlich.

### DETAILLIERTE BESCHREIBUNG

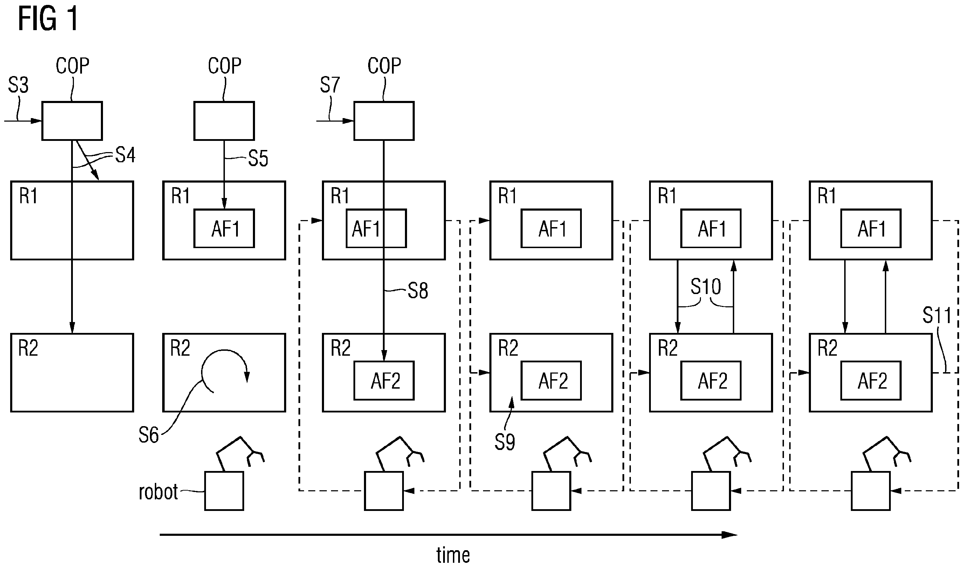

Das offenbarte Verfahren läuft wie folgt ausgeführt und in der Zeichnung dargestellt in einer Kubernetes Umgebung ab. Dabei ist in der Zeichnung der zeitliche Ablauf von links nach rechts dargestellt.

Schritt S1: Es werden eine Automatisierungsfunktion AF, die in einer industriellen Umgebung eingesetzt werden soll, und die Container Orchestrierung Plattform Kubernetes COP bereitgestellt,

Schritt S2: Der Kubernetes Cluster von Kubernetes COP wird um eine Custom Resource Definition ergänzt. Diese enthält eine Schema-Beschreibung, in der angegeben ist, welche Informationen über die Automatisierungsfunktion AF beim Anlegen einer Custom Resource für die Automatisierungsfunktion AF angegeben werden müssen.

Des Weiteren wird der Kubernetes Cluster um einen Custom Resource Controller ergänzt, der die SW Programm Schritte enthält, die beim unterbrechungsfreien Upgrade der Automatisierungsfunktion AF ausgeführt werden müssen:
- Installation der Automatisierungsfunktion AF in einem Resourcen-Set (siehe weiter unten),
- Auslösen eines Test-Programms auf der Testprobe der Automatisierungsfunktion AF, bevor dieser Zugriff auf Aktuatoren erhält (Preactivation Test),
- Auslösen des Umschaltvorgangs von einer ersten (alten) auf eine zweite (neue) Version der Automatisierungsfunktion AF, welcher von Primary Activation koordiniert wird, und
- Auslösen eines Test-Programms auf der Test Probe der Automatisierungsfunktion AF, welches die Automatisierungsfunktion AF überwacht, nachdem diese Zugriff auf die Aktuatoren erhalten hat.

Schritt S3: Die Automatisierungsfunktion AF wird Kubernetes COP in Form einer Custom-Resource-Definition (YAML-Datei) bekannt gemacht, welche die benötigten Informationen für die Automatisierungsfunktion AF enthält.

Schritt S4: Kubernetes COP erstellt dann zwei Resourcen Sets R1 und R2 für zwei verschiedene Versionen (erste Automatisierungsfunktion AF1 und zweite Automatisierungsfunktion AF2) der Automatisierungsfunktion AF (Resourcenbereitstellung). Für Kubernetes werden diese Resourcen als *Services* und *Deployments* bereitgestellt.

Schritt S5: Das erste Resourcen Set R1 (steuert den Roboter) wird dann mit der ersten Automatisierungsfunktion AF1 von Kubernetes COP befüllt und die erste Automatisierungsfunktion AF1 wird gestartet. Das erste Resourcen Set R1 enthält somit die erste Automatisierungsfunktion AF1.

Schritt S6: Das zweite Resourcen Set R2 ist leer und steht bereit für eine weitere Version der Automatisierungsfunktion AF.

Schritt S7: Es gibt nun eine zweite Automatisierungsfunktion AF2. Diese wird von einem Operator bereitgestellt. Der Operator stößt nun den Upgrade-Vorgang an, indem er einen entsprechenden Programm Aufruf an Kubernetes COP absetzt, welcher das in Schritt 3 angelegte Objekt der Custom Resource für die Automatisierungsfunktion AF beinhaltet.

Schritt S8: Die zweite Automatisierungsfunktion AF2 wird nun in das noch ungefüllte zweite Resourcen Set R2 geladen und ebenfalls gestartet.

Schritt S9: Die zweite Automatisierungsfunktion AF2 wird automatisiert getestet, indem die Sensoren verbunden werden, aber die Ausgaben der zweiten Automatisierungsfunktion AF2 nicht an die Aktuatoren weitergegeben werden. Die Ausgabe verbleibt zunächst bei der ersten Automatisierungsfunktion AF1.

Schritt S10: Nach dem erfolgreichen Test wird die Koordination des Übergangs von der ersten Automatisierungsfunktion AF1 auf zweite Automatisierungsfunktion AF2 eingeleitet.

Schritt S11: Die Steuerung der Aktuatoren wird von der ersten Automatisierungsfunktion AF1 an die zweite Automatisierungsfunktion AF2 übergeben. Die zweite Automatisierungsfunktion AF2 übernimmt die ausführende Funktionalität.

Das oben beschriebene Verfahren kann nicht nur in einer industriellen Umgebung, wie einer Fertigungsanlage, eingesetzt werden sondern auch beispielsweise bei der Signaltechnik im Zugverkehr oder bei der Zugbeeinflussung. Erweiterungsschnittstelle einer Container-Orchestrierungsplattform, die es erlaubt, den geordneten Übergang beim Upgrade einer Automatisierungsfunktion von einer Version zur nächsten zu koordinieren. Im Falle von Kubernetes kann dies wie beschrieben mit Custom Resources geschehen.

Die Test- und Upgrade Unit einer Automatisierungsfunktion kann entweder mit der Automatisierungsfunktion selbst im gleichen Container verpackt sein oder separat in einem eigenen Container (Sidecar) bereitgestellt werden.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Automatisiertes Verfahren zum unterbrechungsfreien Upgrade einer Automatisierungsfunktion (AF1, AF2), die ausgebildet ist, Aktuatoren zu steuern und Daten von Sensoren zu empfangen, **gekennzeichnet durch**:
- Bereitstellung (Schritt S3) einer Customer-Resource-Definition an Kubernetes (COP), welche Informationen über die Automatisierungsfunktion enthält,
- Erstellung (Schritt S4) von zwei leeren Resourcen-Sets (R1, R2) **durch** Kubernetes (COP) für eine erste Automatisierungsfunktion (AF1) und eine zweite Automatisierungsfunktion (AF2), wobei die erste Automatisierungsfunktion (AF1) und die zweite Automatisierungsfunktion (AF2) zwei verschiedene Versionen der Automatisierungsfunktion sind,
- Befüllung (Schritt S5) des erste Resourcen Sets (R1) mit der ersten Automatisierungsfunktion (AF1) **durch** Kubernetes (COP),
- Starten der erste Automatisierungsfunktion (AF1) **durch** Kubernetes (COP), wobei die erste Automatisierungsfunktion (AF1) die Aktuatoren steuert und von den Sensoren Daten empfängt,
- Befüllung (Schritt S8) des zweiten Resourcen Sets (R2) mit der zweiten Automatisierungsfunktion (AF2) **durch** Kubernetes (COP),
- Starten der zweiten Automatisierungsfunktion (AF2) **durch** Kubernetes (COP), wobei die zweite Automatisierungsfunktion (AF2) Daten von den Sensoren empfängt aber mit den Aktuatoren nicht verbunden ist,
- automatisierter Test (Schritt S9) der zweiten Automatisierungsfunktion (AF2), wobei die Sensoren verbunden sind, aber die Ausgaben der zweiten Automatisierungsfunktion (AF2) nicht an die Aktuatoren weitergegeben werden.
- nach dem erfolgreichen Test, Einleiten und Koordination (Schritt S10) des Übergangs von der ersten Automatisierungsfunktion (AF1) auf die zweite Automatisierungsfunktion (AF2), und
- Übergabe (Schritt S11) der Steuerung der Aktuatoren von der ersten Automatisierungsfunktion (AF1) an die zweite Automatisierungsfunktion (AF2).

2. Verfahren nach Anspruch 1, **dadurch gekennzeichnet,**
**dass** vor der Bereitstellung (Schritt S3) der Customer-Resource-Definition die Automatisierungsfunktion, die in einer industriellen Umgebung einsetzbar ist, und die Container Orchestrierung Plattform Kubernetes (COP) bereitgestellt wird.

3. Verfahren nach Anspruch 2, **dadurch gekennzeichnet,**
**dass** der Kubernetes Cluster von Kubernetes (COP) um eine Custom Resource Definition ergänzt wird (Schritt S2), wobei die Custom Resource Definition eine Schema-Beschreibung enthält, in der angegeben ist, welche Informationen über die Automatisierungsfunktion beim Anlegen eines Custom Resourcen Sets (R1, R2) für die Automatisierungsfunktion angegeben werden müssen.

4. Verfahren nach Anspruch 3, **dadurch gekennzeichnet,**
**dass** der Kubernetes Cluster um einen Custom Resource Controller ergänzt wird, der SW Programm-Schritte enthält, die beim unterbrechungsfreien Upgrade der Automatisierungsfunktion ausgeführt werden.

5. Verfahren nach Anspruch 4, **dadurch gekennzeichnet,**
**dass** die SW Programm-Schritte aufweisen:
- eine Installation der ersten und zweiten Automatisierungsfunktion in dem Resourcen-Set,
- ein Auslösen eines Test-Programms auf einer Testprobe der zweiten Automatisierungsfunktion, bevor sie Zugriff auf die Aktuatoren erhält,
- ein Auslösen des Umschaltvorgangs von der ersten auf die zweite Automatisierungsfunktion, und
- ein Auslösen eines Test-Programms auf der Testprobe der zweiten Automatisierungsfunktion, welches die zweite Automatisierungsfunktion überwacht, nachdem sie Zugriff auf die Aktuatoren erhalten hat.

6. System zum unterbrechungsfreien Upgrade einer Automatisierungsfunktion, die ausgebildet ist, Aktuatoren zu steuern und Daten von Sensoren zu empfangen, wobei das System mindestens einem Prozessor und mindestens einem Speicher einschließlich Programmcode aufweist, der, wenn er vom Prozessor ausgeführt wird, Operationen bereitstellt, die Folgendes aufweisen:
- Bereitstellung (Schritt S3) einer Customer-Resource-Definition an Kubernetes, welche Informationen über die Automatisierungsfunktion AF enthält,
- Erstellung (Schritt S4) von zwei leeren Resourcen-Sets durch Kubernetes für eine erste Automatisierungsfunktion und eine zweite Automatisierungsfunktion, wobei die erste Automatisierungsfunktion und die zweite Automatisierungsfunktion zwei verschiedene Versionen der Automatisierungsfunktion sind,
- Befüllung (Schritt S5) des erste Resourcen Sets mit der ersten Automatisierungsfunktion durch Kubernetes,
- Starten der erste Automatisierungsfunktion durch Kubernetes, wobei die erste Automatisierungsfunktion die Aktuatoren steuert und von den Sensoren Daten empfängt,
- Befüllung (Schritt S8) des zweiten Resourcen Sets mit der zweiten Automatisierungsfunktion durch Kubernetes,
- Starten der zweiten Automatisierungsfunktion durch Kubernetes, wobei die zweite Automatisierungsfunktion Daten von den Sensoren empfängt aber mit den Aktuatoren nicht verbunden ist,
- automatisierter Test (Schritt S9) der zweiten Automatisierungsfunktion, wobei die Sensoren verbunden sind, aber die Ausgaben der zweiten Automatisierungsfunktion nicht an die Aktuatoren weitergegeben werden.
- nach dem erfolgreichen Test, Einleiten und Koordination (Schritt S10) des Übergangs von der ersten Automatisierungsfunktion auf die zweite Automatisierungsfunktion, und
- Übergabe (Schritt S11) der Steuerung der Aktuatoren von der ersten Automatisierungsfunktion an die zweite Automatisierungsfunktion.

7. System nach Anspruch 6, **dadurch gekennzeichnet,**
**dass** vor der Bereitstellung (Schritt S3) der Customer-Resource-Definition die Automatisierungsfunktion, die in einer industriellen Umgebung eingesetzt einsetzbar ist, und die Container Orchestrierung Plattform Kubernetes bereitgestellt ist.

8. System nach Anspruch 7, **dadurch gekennzeichnet,**
**dass** der Kubernetes Cluster von Kubernetes um eine Custom Resource Definition ergänzt ist (Schritt S2), wobei die Custom Resource Definition eine Schema-Beschreibung enthält, in der angegeben ist, welche Informationen über die Automatisierungsfunktion beim Anlegen einer Custom Resource für die Automatisierungsfunktion AF angegeben werden müssen.

9. System nach Anspruch 8, **dadurch gekennzeichnet,**
**dass** der Kubernetes Cluster um einen Custom Resource Controller ergänzt ist, der SW Programm Operationen enthält, die beim unterbrechungsfreien Upgrade der Automatisierungsfunktion ausgeführt werden.

10. System nach Anspruch 9, **dadurch gekennzeichnet,**
**dass** die SW Programm Operationen aufweisen:
- eine Installation der ersten und zweiten Automatisierungsfunktion in dem Resourcen-Set,
- ein Auslösen eines Test-Programms auf einer Testprobe der zweiten Automatisierungsfunktion, bevor sie Zugriff auf die Aktuatoren erhält,
- ein Auslösen des Umschaltvorgangs von der ersten auf die zweite Automatisierungsfunktion, und
- ein Auslösen eines Test-Programms auf der Testprobe der zweiten Automatisierungsfunktion, welches die zweite Automatisierungsfunktion überwacht, nachdem sie Zugriff auf die Aktuatoren erhalten hat.

11. Computerprogrammprodukt, umfassend ein Computerprogramm, wobei das Computerprogramm in eine Speichereinrichtung einer Einrichtung ladbar ist, wobei mit dem Computerprogramm die Schritte des Verfahrens nach einem der Ansprüche 1 bis 5 ausgeführt werden, wenn das Computerprogramm auf der Einrichtung ausgeführt wird.

12. Computerlesbares Medium, auf welchem ein Computerprogramm gespeichert ist, wobei das Computerprogramm in eine Speichereinrichtung einer Einrichtung ladbar ist, wobei mit dem Computerprogramm die Schritte des Verfahrens nach einem der Ansprüche 1 bis 5 ausgeführt werden, wenn das Computerprogramm auf der Einrichtung ausgeführt wird.
